# EUROPEAN PATENT APPLICATION

(11) **EP 2 725 470 A1**
(43) Date of publication of application: **30.04.2014**
(21) Application number: 13190024.3
(22) Date of filing: 24.10.2013
(51) Int. Cl.: G06F 3/0486, G06F 3/0482, G06F 3/0488, H04M 1/725

(54) **Handheld mobile telecommunications device for a digital cellular telecommunications network**

(30) Priority: 26.10.2012 US 201213661687
(71) Applicant: SAP AG, 69190 Walldorf (DE)
(72) Inventor: Chan, Lap, 69190 Walldorf (DE)
(74) Representative: Richardt Patentanwälte PartG mbB

(57) **Abstract**

The invention provides for a hand-held mobile telecommunications device (800) comprising: a battery (818), a touch screen display (820), a transceiver (810) for exchanging data with a digital cellular telecommunications network (802), and at least one processor (812). Instructions (838, 840, 842) cause the at least one processor to: receive (900) a first data object (830, 830') via the digital cellular telecommunications network; receive (902) a second data object (832, 832') via the digital cellular telecommunications network; display (904) a first representation (834) of the first data object and a second representation (836) of the second data object in the graphical user interface. The graphical user interface comprises a first window (604) for displaying the first representation, a second window (606) for displaying the second representation, and a menu bar (822) separating the two windows. The menu bar has modifier GUI elements (824) for dragging into the first or second window. The instructions cause the at least one processor to modify (910) the first representation in response to dragging a first modifier GUI element into the first window and modify (912) the second representation in response to dragging the second modifier GUI element into the second window.

## Description

### Field of the invention

The invention relates to an cellular digital networks, in particular to the exchange of data between a cellular digital network and a mobile telecommunications device.

### Background and related art

Telecommunications system may display various types of content retrieved from a cellular digital network. In some situations, a user interacts with the displayed content to view information of interest to the user. In some situations, a user may want to display two different sets of data or two different types of data at the same time. Depending on the size of the display device and the amount of data displayed, the display device may not be capable of displaying all of the content to the user simultaneously. In this situation, it is desirable to provide as much data as possible to the user based on the size of the display device.

The problem of visual representation of a user interface is further complicated for battery powered end terminals. Scrolling text or large complicated hierarchies of menus can increase the load on processors and deplete the batteries.

### Summary

The invention provides for a hand-held mobile telecommunications device and a digital cellular telecommunications network in the independent claims. Embodiments are given in the dependent claims.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example a data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa. In the examples contained herein the contents of the computer memory may be duplicated in the computer memory or vice versa. It is also not necessary for particular data file or executable code to be present in specifically the computer memory or the computer storage.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Aspects of the present invention are described with reference to flowchart illustrations and/or block diagrams of methods, apparatus (systems) and computer program products according to embodiments of the invention. It will be understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, gear sticks, wired glove, remote control, and accelerometer are all examples of user interface components which enable the receiving of information or data from an operator.

A 'display' or 'display device' as used herein encompasses an output device or a user interface adapted for displaying images or data. A display may output visual, audio, and/or tactile data. A 'touch screen display' is a display which is also operable to receive user input via touches or gestures.

A 'database' as used herein encompasses a data file or repository which contains data that may be accessed by a processor. Examples of databases are, but are not limited to: a data file, a relational database, a file system folder containing data files, and a spreadsheet file.

In one aspect the invention provides for a hand-held mobile telecommunications device. A hand-held mobile telecommunications device as used herein encompasses a hand-held apparatus for exchanging information or data with a digital cellular telecommunications network. Examples of a hand-held mobile telecommunications device may for instance be a smart phone or a tablet computer that is enabled to communicate with a digital cellular telecommunications network.

A digital cellular telecommunications network as used herein encompasses a cellular telecommunications system that is operable for exchanging digital information with devices that connect to it.

The hand-held mobile telecommunications device comprises a battery for powering the mobile telecommunications device. The hand-held mobile telecommunications device further comprises a touch screen display operable for displaying a graphical user interface and for receiving user input. The hand-held mobile telecommunications device further comprises a transceiver for exchanging data with a digital cellular telecommunications network. The hand-held mobile telecommunications device further comprises at least one processor. The hand-held mobile telecommunications device further comprises a memory for storing machine-executable instructions for execution by the processor. Execution of the instructions cause the at least one processor to receive a first data object via the digital cellular telecommunications network. Execution of the instructions further cause the at least one processor to receive a second data object via the digital cellular telecommunications network. Execution of the instructions further cause the at least one processor to display a first representation of the first data object and a second representation of the second data object in the graphical user interface. The first representation and the second representation may encompass a rendering or a portion of the first and second data objects. For instance if the first and second data objects contain information from a database a portion or the entire database record may be displayed in the graphical user interface. If the first and second data objects represent data which can be graphed or displayed graphically then the first representation and second representation may in fact be plots of a portion or the entire data within the first and second data objects. If the first and second data objects for instance contain product information or a description then the first and second representation may be all or a portion of that data. The graphical user interface comprises a first window for displaying the first representation and a second window for displaying the second representation. The graphical user interface further comprises a menu bar separating the first window and the second window. The first window and the second window represent different regions for displaying the two different data objects. There is a menu bar which is then located intermediate or separating the first window and the second window. The menu bar further comprises multiple modifier GUI elements. Each of the multiple modifier GUI elements are operable to be dragged into one of the first window and the second window. That is to say an operator or user of the hand-held mobile telecommunications device can touch one of the multiple modifier GUI elements and drag it into either the first window or the second window. Execution of the instructions further cause the at least one processor to modify the first representation in response to dragging a first multiple modifier GUI element into the first window. The first multiple modifier GUI element is one of the multiple modifier GUI elements. Execution of the instructions further cause the at least one processor to modify the second representation in response to dragging the second modifier GUI element into the second window. The second modifier GUI element is one of the multiple modifier GUI elements. If one of the modifier GUI elements is dragged into the first window or the second window then this causes the executable code associated with that particular modifier GUI element to be executed to modify either the first or second representation. This embodiment may be beneficial because it enables a compact displaying of data on the touch screen display. A single menu bar is used for modifying both the first window and the second window. This has the technical advantage of only displaying one menu bar. This not only saves display space but it may also reduce the battery consumption during use of the graphical user interface. The scrolling and also the displaying of hierarchical menu boxes and windows on a graphical user interface consumes processor cycles which in turn more rapidly depletes the battery of energy. Individual modifier GUI elements are all displayed on the menu bar and in the use of the menu bar additional boxes or sub-menus do not need to be displayed. This may result in more efficient battery use.

In another embodiment the first data object is a first database response. The second data object is a second database response. This embodiment may be beneficial because it provides an efficient means of displaying data from a database and also an efficient means for modifying how this data is displayed in the graphical user interface.

In another embodiment the modifying of the first representation in response to dragging the first modifier GUI element into the first window comprises querying a database with a first database query using the digital cellular telecommunications network. Modifying the first representation in response to dragging the first modifier GUI element into the first window further comprises receiving a first database query response from the database. Modifying the first representation in response to dragging the first modifier GUI element into the first window further comprises modifying the first representation using the first database query response. In this embodiment the use for dragging of a modifier GUI element in the first window executes a database query and then the response of this query is used to modify the first representation. This embodiment may be beneficial because it greatly reduces the battery life because the user does not need to consume computing resources to compose a possibly complex database query.

In another embodiment the modifying of the second representation in response to dragging the second modifier GUI element in the second window comprises querying the database with a second database query using the digital cellular telecommunications network. The modifying of the second representation in response to dragging the second modifier GUI element into the second window further comprises receiving a second database query response from the database. The modifying of the second representation in response to dragging the second modifier GUI element into the second window further comprises modifying the second representation using the second database query response.

In another embodiment the modifying of the first representation in response to dragging the first modifier GUI element into the first window response comprises executing a first algorithm to process the first database response. The first algorithm may for instance form a statistical analysis on the first database response or may extract certain portions of the first database response to the display. The first algorithm may also process some of the data within the first database response.

In another embodiment the modification of the second representation in response to dragging the second modifier GUI element into the second window comprises executing a second algorithm to process the first database response. The second algorithm may be analogous to the first algorithm.

In another embodiment the first representation comprises a first plot of a portion of the first data object. That is to say a portion of the first data object or the entire data object may be displayed as a plot or graph as the first representation. The second representation comprises a second plot of a portion of the second data object. The first representation is modified in response to dragging the first modifier GUI element into the first window by modifying the first plot. The second representation is modified in response to dragging the second modifier GUI element into the first window by modifying the second plot. This embodiment may be beneficial because a single menu bar can execute commands which are used to modify the first plot or the second plot.

In another embodiment modifying the first plot and/or modifying the second plot comprises any one of the following: modifying a portion of the first data object, modifying a portion of the second data object, rescaling the first plot, rescaling the second plot, and combinations thereof.

In another embodiment execution of the instructions further cause the at least one processor to send a first data object request via the digital cellular telecommunications network. The first data object is received via the digital cellular telecommunications network in response to the first data object request. Execution of the instructions further cause the at least one processor to send a second data object request via the digital cellular telecommunications network. The second data object is received via the digital cellular telecommunications network in response to the first data object request.

In another embodiment the first data object request and/or the second data object request are any one of the following: an SQL query for a relational database, a web page request, a data request and a video conference connection request. For instance the menu bar may have icons representing individuals or locations or pictures of people or locations and dragging the particular GUI element from the window bar causes a connection to be established in the particular window which the icon is dragged into.

In another embodiment the menu bar is operable for displaying multiple selector GUI elements before displaying the first representation and the second representation. Each of the multiple selector GUI elements are operable to be dragged into the first window and/or the second window. The first data object request is sent in response to a first selector GUI element being dragged into the first window. The second data object is sent in response to a second selector GUI element being dragged into the second window. The first selector GUI element is selected from the multiple selector GUI elements. The second selector GUI element is selected from the multiple selector GUI elements. This embodiment is beneficial because not only is the menu bar used for modifying the first representation and the second representation it may also be used for selecting what is the first data object and the second data object. This may lead to even further efficient use of the processor resulting in a further reduction of battery consumption.

In another embodiment the first data object and the second data object are any one of the following: a plot, a video feed, a video, a database record, a sales report, a product comparison, a graphic, and a video call connection.

In another aspect the invention provides for a digital cellular telecommunications network comprising a hand-held mobile telecommunications device according to an embodiment. That is to say the hand-held mobile telecommunications device is considered to be a portion of the digital cellular telecommunications network. In other examples the digital cellular telecommunications network may also comprise a computer system or database system which provides the first and second data objects via a radio connection to the hand-held mobile telecommunications device.

In another embodiment the digital cellular telecommunications network further comprises a server operable for sending the first data object and the second data object via the digital cellular telecommunications network to the hand-held mobile telecommunications device. For example the server may provide data files or access to a database to the hand-held mobile telecommunications device.

In another embodiment the digital cellular telecommunications network further comprises a radio transceiver means operable for forming a radio connection (804) with the hand-held mobile telephone device. The transceiver means enables the digital cellular telecommunications network to exchange data with the with hand-held mobile telephone devices connected to it. For example the transceiver means may be considered to be, but is not limited to: a cell of the digital cellular telecommunications network, a transceiver connected to an antenna, and a base station.

In an example a computer-implemented method comprises: accessing a first set of data;
accessing a second set of data;
accessing menu data, the menu data associated with a plurality of menu actions relevant to the first set of data and the second set of data;
generating display data that allows a display device to present the first set of data, the second set of data, and the menu such that the menu is positioned between the first set of data and the second set of data;
receiving a user selection of a menu action; and
responsive to receiving the user selection of the menu action, generating, using one or more processors, a graphical object that allows the user to indicate whether to apply the menu action to the first set of data or the second set of data.

In a further example the method may further comprise:
receiving a user indication of whether to apply the menu action to the first set of data or the second set of data; and
applying the menu action to the first set of data or the second set of data responsive to the user indication.

In a further example the menu action includes at least one
of a copy action, a paste action, a delete action, a move action, a send action, a highlight action, a zoom action, and an execute action.

In a further example the graphical object includes a first
pointer identifying the first set of data and a second pointer identifying the second set of data.

In a further example the graphical object further includes a first selection area associated with the first pointer and a second selection area associated with the second pointer.

In a further example the graphical object is displayed proximate the selected menu action.

In a further example the menu is adjacent to both the first set of data and the second set of data.

In a further example the first set of data and the second set of data are accessed from a common data source.

In a further example the menu data is accessed from the common data source.

In a further example the user selection of the menu action includes touching the display device proximate the menu action.

In a further example the user selection of the menu action includes positioning a pointing device proximate the menu action.

In an example a computer-implemented method comprises:
accessing a first set of data;
accessing a second set of data;
accessing menu data, the menu data associated with a plurality of menu actions relevant to the first set of data and the second set of data;
generating display data that allows a display device to render a display containing the first set of data, the second set of data, and the menu such that the menu is positioned between the first set of data and the second set of data;
receiving a user selection of a menu action;
responsive to receiving the user selection, generating, using one or more processors, data that allows the display device to render a graphical object that allows the user to indicate whether to apply the menu action to the first set of data or the second set of data, the graphical object having a first activation option associated with the first set of data and a second activation option associated with the second set of data;
receiving a user selection indicating the first activation option or the second activation option; and
identifying an activity to perform based on the selected menu action and the selected activation option.

In a further example the graphical object is displayed proximate the selected menu action.

In a further example the method further comprises comprising performing the identified activity.

In a further example the menu action includes at least one of a copy action, a paste action, a delete action, a move action, a send action, a highlight action, a zoom action, and an execute action.

In a further example the first activation option is a first pointer identifying the first set of data, and wherein the second activation option is a second pointer identifying the second set of data.

In a further example the user selection of the menu action includes touching the display device proximate the menu action.

In a further example the user selection of the menu action includes positioning a pointing device proximate the menu action.

In an example an apparatus comprises:
an interface configured to communicate with a user of the apparatus; a memory configured to store data; and
one or more processors coupled to the interface and the memory, the one or more processors configured to:
   access menu data, the menu data associated with a plurality of data items capable of display in a first display area and a second display area;
   generate display data that allows a display device to present the menu to the user such that the menu is positioned between the first display area and the second display area;
   receive a user selection of a data item associated with the menu; and responsive to the received user selection of the data item, generate a graphical object that allows the user to indicate whether to display the data item in the first display area or the second display area.

In a further example the graphical object includes a first pointer identifying the first display area and a second pointer identifying the second display area.

A 'data item' as used herein may also refer to a modifier GUI element or a selector GUI element.

A 'GUI' as used here is equivalent to a graphical user interface. GUI may also be referred to as a 'user interface.'

A'display area' may also refer to a 'window' of a GUI.

It is understood that one or more of the aforementioned embodiments of the invention or examples may be combined as long as the combinations are not mutually exclusive.

### Brief description of the drawings

The present disclosure is illustrated by way of example and not limitation in the figures of the accompanying drawings, in which like references indicate similar elements.
Fig. 1 is a block diagram of an example system capable of employing the systems and methods described herein.
Fig. 2 is a flow diagram of an example method of managing the display of two sets of data that are accessible from a single menu.
Fig. 3 is a flow diagram of an example method of displaying menu activation options to a user.
Figs. 4A and 4B illustrate an example user interface displaying two sets of data that are accessible from a single menu.
Figs. 5A and 5B illustrate another example user interface displaying two sets of data that are accessible from a single menu.
Fig. 6 illustrates an example user interface including two display areas and multiple items to present in the two display areas.
Fig. 7 depicts a block diagram of a machine in the example form of a processing system within which may be executed a set of instructions for causing the machine to perform any one or more of the methodologies discussed herein.
Fig. 8 illustrates an example of a hand-held mobile telecommunications device connected to a digital cellular telecommunications network.
Fig. 9 shows a flow chart which illustrates a method of using the hand-held mobile telecommunications device and digital cellular telecommunications network of Fig. 8.
Fig. 10 illustrates a further example of a hand-held mobile telecommunications device connected to a digital cellular telecommunications network.

### Detailed Description

Like numbered elements in these figures are either equivalent elements or perform the same function. Elements which have been discussed previously will not necessarily be discussed in later figures if the function is equivalent.

The description that follows includes illustrative systems, methods, techniques, instruction sequences, and computing machine program products that embody illustrative embodiments. In the following description, for purposes of explanation, numerous specific details are set forth in order to provide an understanding of various embodiments of the inventive subject matter. It will be evident, however, to those skilled in the art that embodiments of the inventive subject matter may be practiced without these specific details. In general, well-known instruction instances, protocols, structures, and techniques have not been shown in detail.

At least some of the embodiments described herein provide systems
and methods for managing the display of content on a display device. These embodiments discuss, by way of example, the display and management of multiple data sets in a single display device. Some embodiments describe a single menu capable of performing activities related to either of the multiple data sets. Other embodiments describe a display device that includes two display areas and a menu area that permits selection of multiple data items to present in the two display areas. The use of a single menu (or single menu area) minimizes the display area used by the menu, thereby providing increased display area for the display of data to the user.

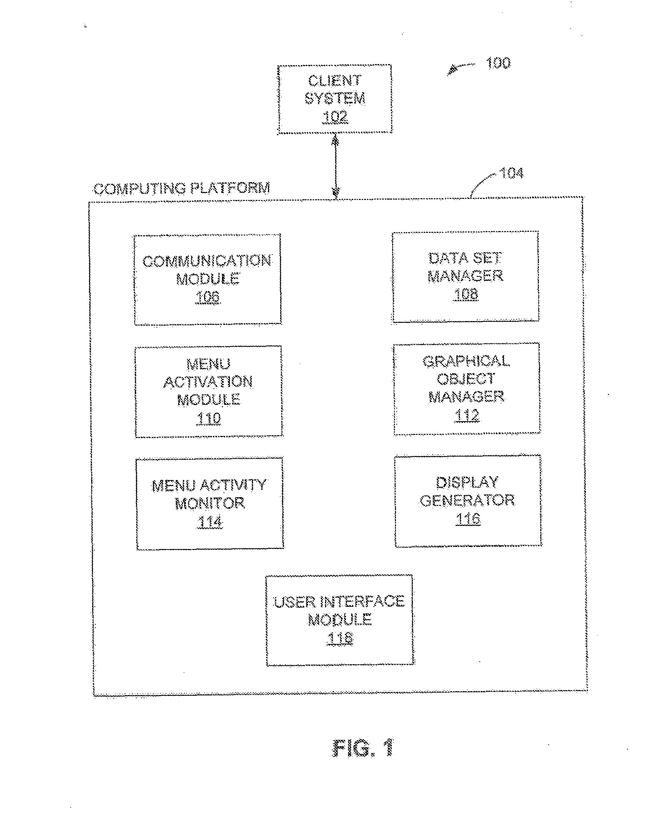

Fig. 1 is a block diagram of an example system 100 capable of employing the systems and methods described herein. In the example of Fig. 1, a computing platform 104 is accessed by a client system 102. Although one client system 102 is shown in FIG. 1, particular embodiments may include any number of client systems 102 accessing the computing platform 104. The client system 102 includes any type of system capable of communicating with computing platform 104. For example, the client system 102 may include a server, a client computer, a desktop computer, a laptop computer, a tablet computer, a mobile device, a portable entertainment device or any other machine capable of performing one or more of the functions and operations discussed herein. The computing platform 104 includes, for example, machines and software to implement the described content management systems and methods.

In some embodiments, the client system 102 communicates with the computing platform 104 via a data communication network, such as the Internet, a local area network (LAN), wide area network (WAN), and so forth. In particular implementations, the client system 102 may be accessed or operated by a variety of users, such as an application developer, a network administrator or an end-user of an application. In other implementations, one or more functions performed by the client system 102 may be handled automatically and without user intervention.

The computing platform 104 includes a communication module 106 capable of communicating with a variety of different systems through a data communication network or other communication mechanism. For example, the communication module 106 may communicate with the client system 102, other computing platforms, content sources, data storage devices, and the like. A data set manager 108 performs various functions related to accessing, organizing, presenting, and editing various types of data. For example, the data set manager 108 identifies and stores data for presentation on a display device as discussed herein. Further, the content manager 108 modifies data based on, for example, user instructions and various menu-selected actions. As used herein, a "data set" includes any type of data, such as text data, numerical data, graphical data, documents, images, spreadsheets, application data, and the like. A data set may also include any grouping or collection of data, such as different types of data grouped together in a single data set. Additionally, the terms "data set" and "set of data" are used interchangeably herein.

The computing platform 104 further includes a menu activation module 110 and a graphical object manager 112. The menu activation module 110 manages the display, selection, and operation of various menu commands (or menu options) capable of being rendered by the client system 102 for presentation to a user of the client system 102. As discussed herein, various menu commands are available to manage the display of information, such as data sets. The graphical object manager 112 manages the appearance of the various menu commands (or menu options) based on user interactions with those menu commands. For example, the graphical object manager 112 may cause the display of a graphical object that allows the user to indicate how to apply a particular menu command. The computing platform 104 also includes a menu activity monitor 114 that manages the interaction between a user of the client system 102 and the various menu commands. A display generator 116 generates appropriate display information to support the display of data set information, menu commands, and the like to the user. A user interface module 118 manages various interaction between the user of client system 102 and the computing platform 104.

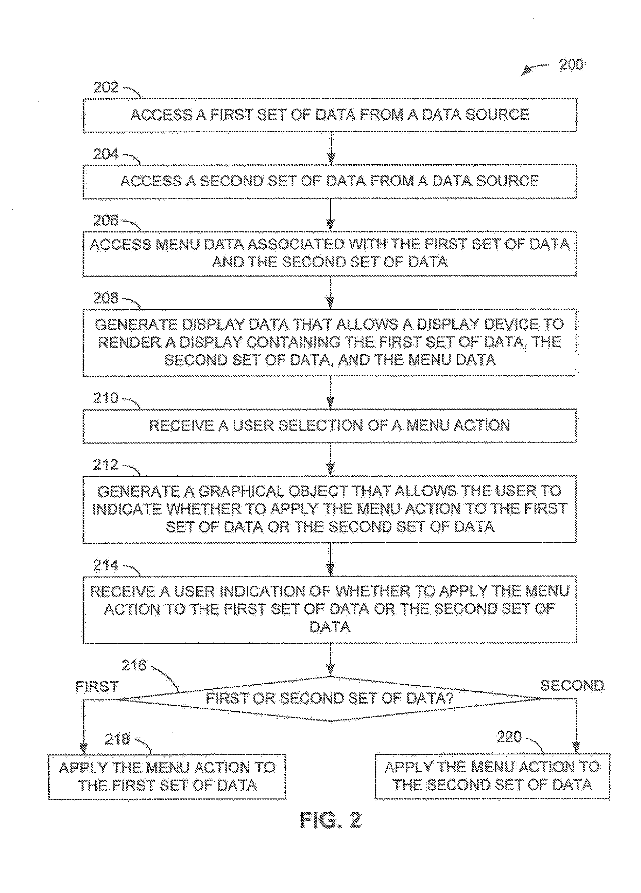

Fig. 2 is a flow diagram of an example method 200 of managing the display of two sets of data that are accessible from a single menu. Initially, the method 200 accesses a first set of data from a data source at 202. As mentioned above, a data set may include any type of data, such as text data, numerical data, graphical data, documents, images, spreadsheets, application data, and the like. The data source may be located within the computing platform 104 (Fig. 1) or external to the computing platform 104. The method 200 also accesses a second set of data from a data source at 204. The first set of data and the second set of data may be accessed from the same data source or different data sources.

The method 200 continues by accessing menu data associated with the first set of data and the second set of data at 206. The menu data includes, for example, various actions that can be performed with respect to the first set of data and the second set of data. Example actions include a copy action, a paste action, a delete action, a move action, a send action, a highlight action, a zoom action, and an execute action. The method 200 generates display data that allows a display device to render a display containing the first set of data, the second set of data, and the menu data at 208.

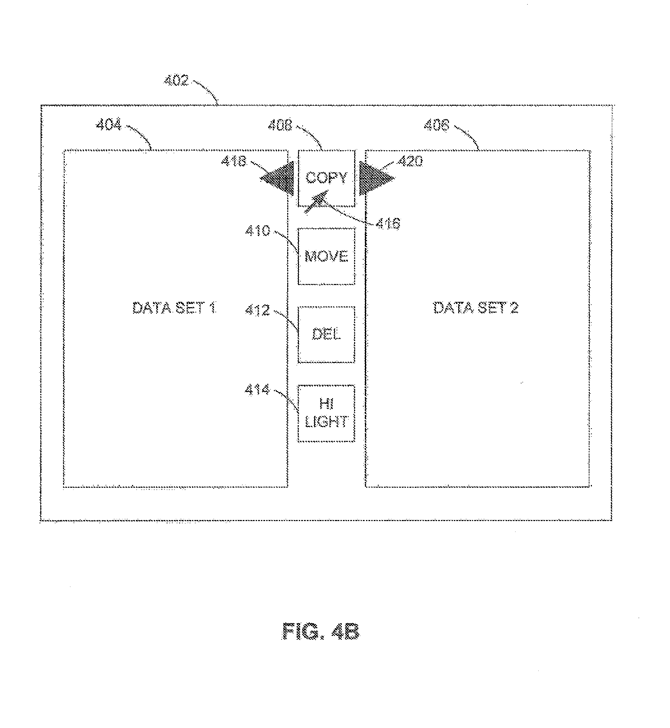

After presenting the various data to a user, the method 200 receives a user selection of a menu action at 210. The user may select a menu action, for example, by positioning a pointing device, such as a cursor, over the displayed menu action or by touching the displayed menu action on a touch-sensitive display screen. In response to receiving the user selection of a particular menu item, the method 200 generates a graphical object that allows the user to indicate whether to apply the menu action to the first set of data or the second set of data at 212. As discussed below, some embodiments position the menu data (e.g., menu indicators) on the display device between the first set of data and the second set of data. Thus, the same menu indicator is used to perform an action on the first set of data or the second set of data. When the user selects a particular menu action, the graphical object allows the user to identify which set of data is associated with the selected action. As shown in Fig. 4B, the graphical object may be an arrow pointing to one or both of the sets of data.

The method 200 then receives a user indication of whether to apply the menu action to the first set of data or the second set of data at 214. For example, the user may indicate a particular set of data by activating (clicking or touching) an arrow pointing toward the desired set of data. If the user indicates the first set of data at 216, the method 200 applies the menu action to the first set of data at 218. If the user indicates the second set of data at 216, the method 200 applies the menu action to the second set of data at 220.

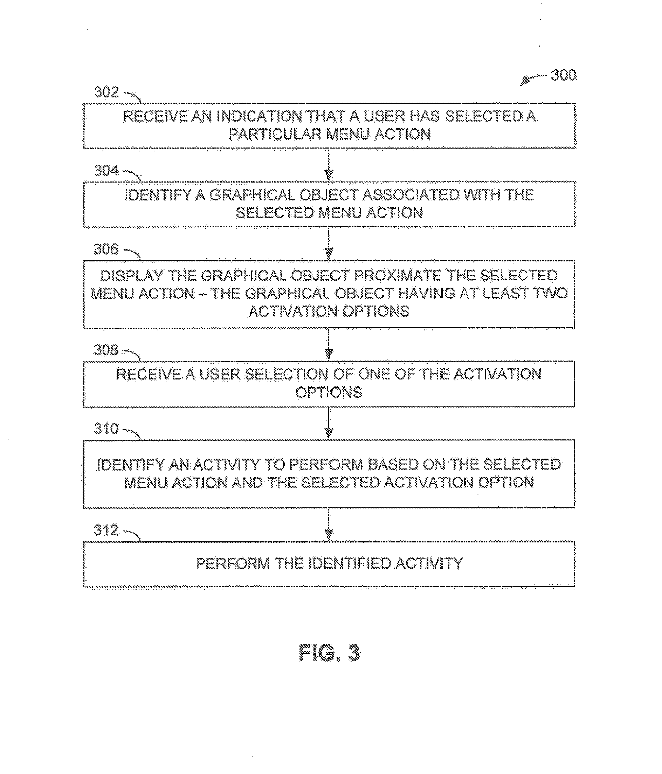

Fig. 3 is a flow diagram of an example method 300 of displaying menu activation options to a user. Initially, the method 300 receives an indication that a user has selected a particular menu action at 302. The method 300 continues by identifying a graphical object (or multiple graphical objects) associated with the selected menu action at 304. As discussed herein, the graphical object may permit the user to identify which of multiple sets of data the selected menu action is to be applied. The method displays the graphical object proximate the selected menu action at 306. In some embodiments, the graphical object has at least two activation options, such as applying the selected menu action to a first set of data or applying the selected menu action to a second set of data.

The method 300 continues by receiving a user selection of one of the activation options at 308. An activity to perform is then identified based on the selected menu action and the selected activation option at 310. The method then performs the identified activity at 312.

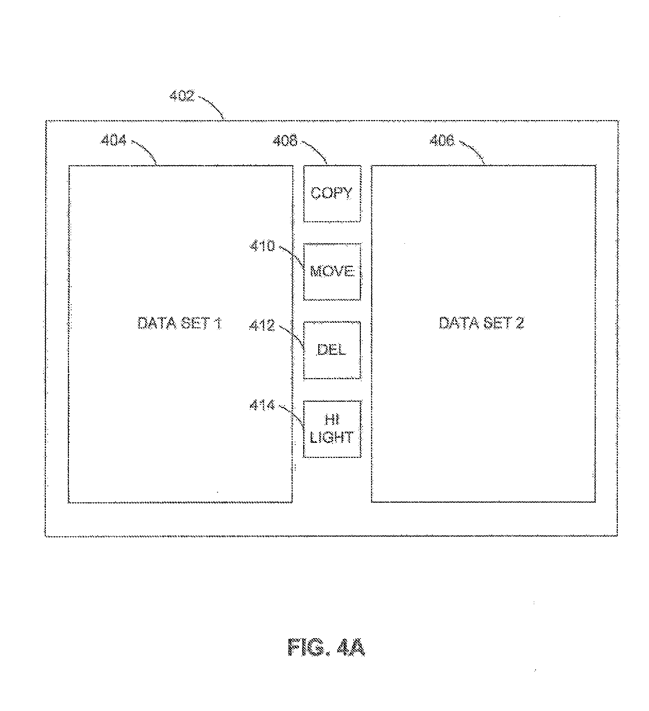

Figs. 4A and 4B illustrate an example user interface 402 displaying two sets of data 404 and 406 that are accessible from a single menu. As discussed herein, data sets 404 and 406 may contain any type of data. In the example user interface 402, four menu actions are shown: a copy action 408, a move action 410, a delete action 412, and a highlight action 414. In the example of Fig. 4A, each of the four menu actions 408-414 are relevant to (or applicable to) the data in both data sets 404 and 406. In other embodiments, one or more of the menu actions 408-414 are not relevant (or inapplicable) to one of the data sets 404 or 406. The menu actions 408-414 may perform activities between the two data sets 404 and 406 (e..g, copying data from data set 404 to data set 406) or between one of the data sets 404, 406 and another application or data source (e.g., moving data from data set 406 to a data storage device). Although four menu actions 408-414 are shown in Fig. 4A, alternate embodiments may contain any number of different menu actions, including additional menu actions not shown in Fig. 4A.

Fig. 4B shows the example user interface 402 displaying two sets of data 404 and 406 shown in Fig. 4A. Fig. 4B also shows the four menu actions 408-414 shown in Fig. 4A. A cursor 416 controlled by a user is shown in Fig. 4B as being positioned over menu action 408. Additionally, graphical objects 418 and 420 are displayed near menu action 408 in response to the cursor 416 being positioned over menu action 408. The graphical objects 418 and 420 indicate to the user that the menu action 408 can be applied to data set 404 or data set 406. By positioning the four menu actions 408-414 between the two data sets 404, 406, a single set of menu actions 408-414 are used to manage activities in both data sets 404 and 406. The user then activates (e.g., by clicking a mouse button) either graphical object 418 or graphical object 420 to indicate which data set 404, 406 is the target of the menu action 408. In the example of Fig. 4B, user selection of graphical object 418 causes the menu action 408 to be applied to data set 404. Similarly, user selection of graphical object 420 causes the menu action 408 to be applied to data set 406.

In some embodiments, the graphical objects 418 and 420 are initially displayed when the cursor 416 is close to menu action 408. In other embodiments, the graphical objects 418 and 420 are displayed when the cursor 416 is located over menu action 408. Alternatively, the graphical objects 418 and 420 may be displayed when the cursor 416 is located over menu action 408 and the user activates the cursor 416 (e.g., by clicking on a button or other activation mechanism associated with a mouse that is controlling cursor 416).

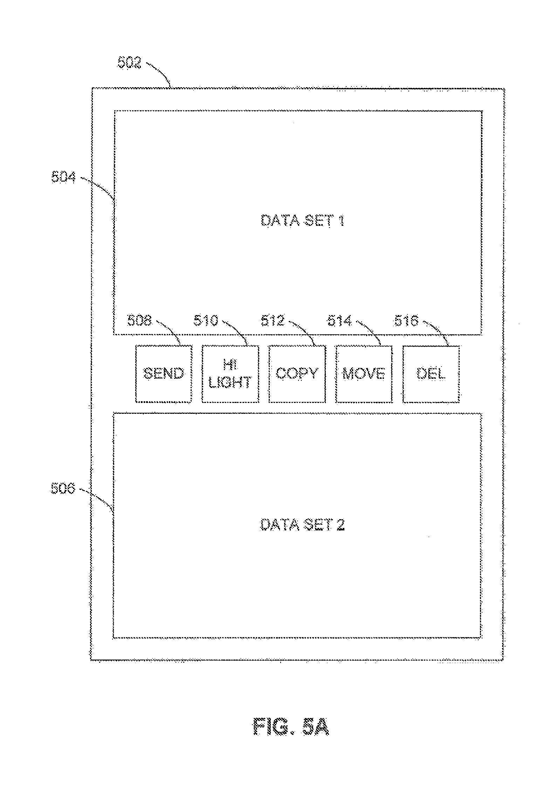

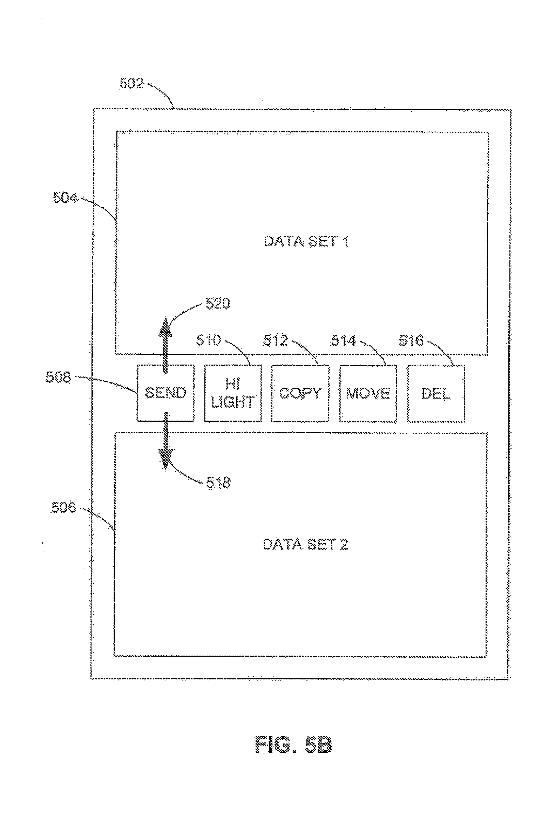

Figs. 5A and 5B illustrate another example user interface 502 displaying two sets of data 504 and 506 that are accessible from a single menu. In the example user interface 502, five menu actions are shown: a send action 508, a highlight action 510, a copy action 512, a move action 514, and a delete action 516. In the example of Fig. 5A, each of the five menu actions 508-516 are relevant to (or applicable to) the data in both data sets 504 and 506. In other embodiments, one or more of the menu actions 508-516 are not relevant (or inapplicable) to one of the data sets 504 or 506. The menu actions 508-516 may perform activities between the two data sets 504 5nd 406 (e..g, moving data from data set 504 to data set 506) or between one of the data sets 504, 506 and another application or data source (e.g., sending data from data set 504 to another device or system). Although five menu actions 508-516 are shown in Fig. 5A, alternate embodiments may contain any number of different menu actions, including additional menu actions not shown in Fig. 5A.

Fig. 5B shows the example user interface 502 displaying two sets of data 504 and 506 shown in Fig. 5A. Fig. 5B also shows the five menu actions 508-516 shown in Fig. 5A. In the example of Fig. 5B, the user interface 502 is displayed on a touch-sensitive display device. A user of the touch-sensitive display device may touch any of the menu actions 508-516 to indicate a desire to perform the associated activity. In the example of Fig. 5B, the user has touched the menu action 508, which caused the display of graphical objects 518 and 520 on the user interface 502. The graphical objects 518 and 520 indicate to the user that the menu action 508 can be applied to data set 504 or data set 506 by sliding their finger in the appropriate direction. For example, if the user wants the menu action 508 to be applied to data set 506, the user slides their finger in the direction indicated by graphical object 518. If the user wants the menu action 508 to be applied to data set 504, the user slides their finger in the direction indicated by graphical object 520.

In some embodiments, the graphical objects 518 and 520 are initially displayed when the user's finger contacts the touch-sensitive display device in an area that is close to menu action 508. In other embodiments, the graphical objects 518 and 520 are displayed when the user's finger contacts the touch-sensitive display device directly over menu action 508.

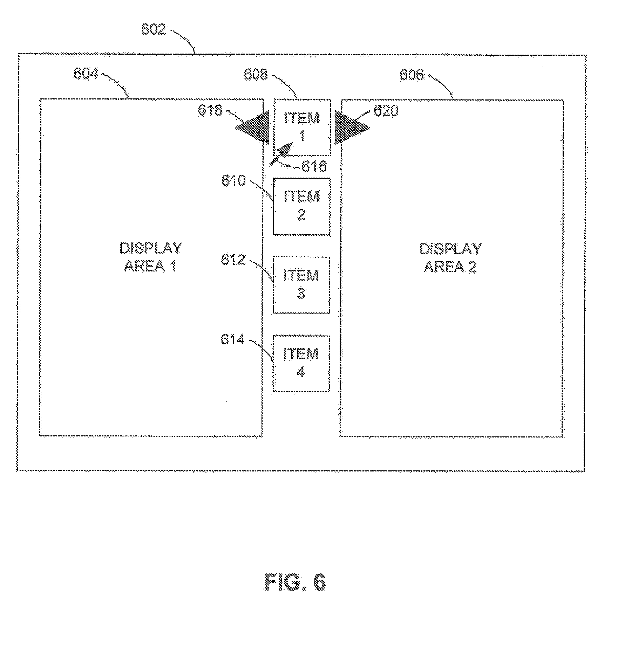

Fig. 6 illustrates an example user interface 602 including two display areas 604 and 606, and multiple data items 608, 610, 612, and 614 to present in the two display areas 604, 606. The two display areas 604 and 606 represent portions of the user interface 602 that can display various types of data, such a the data associated with data items 608-614. For example, a user may compare data item 608 with data item 610 by placing one of the data items in the display area 604, and the other data item in the display area 606. Although four data items 608-614 are shown in Fig. 6, alternate embodiments may include any number of different data items for display in the display areas 604 and 606. Data items 608-614 include any type of data, such as text, spreadsheets, graphs, photographs, video content, and the like.

Fig. 6 also illustrates a cursor 616, which is controlled by a user to be positioned over data item 608. Additionally, graphical objects 618 and 620 are displayed near data item 608 in response to the cursor 616 being positioned over data item 608. The graphical objects 618 and 620 indicate to the user that the data item 608 can be displayed in the display area 604 or in the display area 606. The user then activates (e.g., by clicking a mouse button) either graphical object 618 or graphical object 620 to indicate which display area 604, 606 to display data item 608. In the example of Fig. 6, user selection of graphical object 618 causes data item 608 to be displayed in the display area 604. Similarly, user selection of graphical object 620 causes data item 608 to be displayed in the display area 606.

In some embodiments, the graphical objects 618 and 620 are initially displayed when the cursor 616 is close to data item 608. In other embodiments, the graphical objects 618 and 620 are displayed when the cursor 616 is located over data item 608. Alternatively, the graphical objects 618 and 620 may be displayed when the cursor 616 is located over data item 608 and the user activates the cursor 616 (e.g., by clicking on a button or other activation mechanism associated with a mouse that is controlling cursor 616).

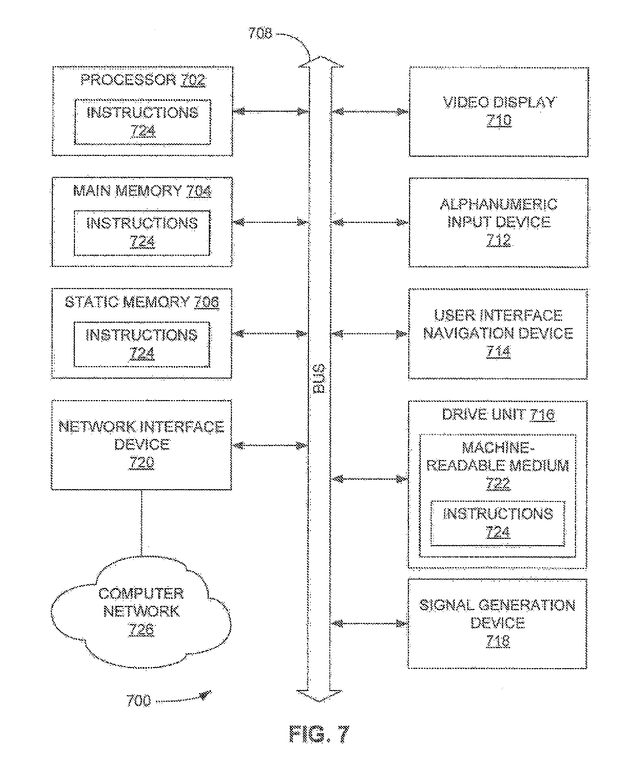

Fig. 7 depicts a block diagram of a machine in the example form of a processing system 700 within which may be executed a set of instructions for causing the machine to perform any one or more of the methodologies discussed herein. In alternative embodiments, the machine operates as a standalone device or may be connected (for example, networked) to other machines. In a networked deployment, the machine may operate in the capacity of a server or a client machine in a server-client network environment, or as a peer machine in a peer-to-peer (or distributed) network environment.

The machine is capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example of the processing system 700 includes a processor 702 (for example, a central processing unit (CPU), a graphics processing unit (GPU), or both), a main memory 704 (for example, random access memory), and static memory 706 (for example, static random-access memory), which communicate with each other via bus 708. The processing system 700 may further include video display unit 710 (for example, a plasma display, a liquid crystal display (LCD), or a cathode ray tube (CRT)). The processing system 700 also includes an alphanumeric input device 712 (for example, a keyboard), a user interface (UI) navigation device 714 (for example, a mouse), a disk drive unit 716, a signal generation device 718 (for example, a speaker), and a network interface device 720.

The disk drive unit 716 (a type of non-volatile memory storage) includes a machine-readable medium 722 on which is stored one or more sets of data structures and instructions 724 (for example, software) embodying or utilized by any one or more of the methodologies or functions described herein. The data structures and instructions 724 may also reside, completely or at least partially, within the main memory 704, the static memory 706, and/or within the processor 702 during execution thereof by processing system 700, with the main memory 704 and processor 702 also constituting machine-readable, tangible media.

The data structures and instructions 724 may further be transmitted or received over a computer network 726 via network interface device 720 utilizing any one of a number of well-known transfer protocols (for example, Hyper Text Transfer Protocol (HTTP)).

Certain embodiments are described herein as including logic or a number of components, modules, or mechanisms. Modules may constitute either software modules (for example, code embodied on a machine-readable medium or in a transmission signal) or hardware modules. A hardware module is a tangible unit capable of performing certain operations and may be configured or arranged in a certain manner. In example embodiments, one or more computer systems (for example, the processing system 700) or one or more hardware modules of a computer system (for example, a processor 702 or a group of processors) may be configured by software (for example, an application or application portion) as a hardware module that operates to perform certain operations as described herein.

In various embodiments, a hardware module may be implemented mechanically or electronically. For example, a hardware module may include dedicated circuitry or logic that is permanently configured (for example, as a special-purpose processor, such as a field-programmable gate array (FPGA) or an application-specific integrated circuit (ASIC)) to perform certain operations. A hardware module may also include programmable logic or circuitry (for example, as encompassed within a general-purpose processor 702 or other programmable processor) that is temporarily configured by software to perform certain operations.

It will be appreciated that the decision to implement a hardware module mechanically, in dedicated and permanently configured circuitry, or in temporarily configured circuitry (for example, configured by software) may be driven by cost and time considerations.

Accordingly, the term "hardware module" should be understood to encompass a tangible entity, be that an entity that is physically constructed, permanently configured (for example, hardwired) or temporarily configured (for example, programmed) to operate in a certain manner and/or to perform certain operations described herein. Considering embodiments in which hardware modules are temporarily configured (for example, programmed), each of the hardware modules need not be configured or instantiated at any one instance in time. For example, where the hardware modules include a general-purpose processor 702 that is configured using software, the general-purpose processor 702 may be configured as respective different hardware modules at different times. Software may accordingly configure a processor 702, for example, to constitute a particular hardware module at one instance of time and to constitute a different hardware module at a different instance of time.

Modules can provide information to, and receive information from, other modules. For example, the described modules may be regarded as being communicatively coupled. Where multiples of such hardware modules exist contemporaneously, communications may be achieved through signal transmissions (such as, for example, over appropriate circuits and buses) that connect the modules. In embodiments in which multiple modules are configured or instantiated at different times, communications between such modules may be achieved, for example, through the storage and retrieval of information in memory structures to which the multiple modules have access. For example, one module may perform an operation and store the output of that operation in a memory device to which it is communicatively coupled. A further module may then, at a later time, access the memory device to retrieve and process the stored output. Modules may also initiate communications with input or output devices, and can operate on a resource (for example, a collection of information).

The various operations of example methods described herein may be performed, at least partially, by one or more processors 702 that are temporarily configured (for example, by software) or permanently configured to perform the relevant operations. Whether temporarily or permanently configured, such processors 702 may constitute processor-implemented modules that operate to perform one or more operations or functions. The modules referred to herein may, in some example embodiments, include processor-implemented modules.

Similarly, the methods described herein may be at least partially processor-implemented. For example, at least some of the operations of a method may be performed by one or more processors 702 or processor-implemented modules. The performance of certain of the operations may be distributed among the one or more processors 702, not only residing within a single machine but deployed across a number of machines. In some example embodiments, the processors 702 may be located in a single location (for example, within a home environment, within an office environment, or as a server farm), while in other embodiments, the processors 702 may be distributed across a number of locations.

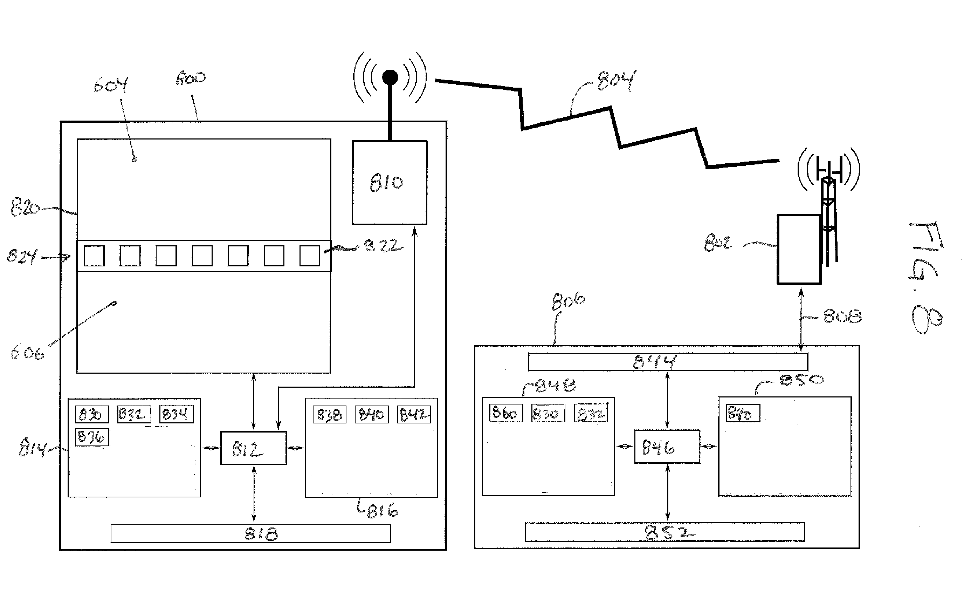

Fig. 8 shows an example of a hand-held mobile telecommunications device 800. The hand-held mobile telecommunications device 800 is connected to a digital cellular telecommunications network 802 via a radio connection 804. The digital cellular telecommunications network 802 is connected to a server 806 via a network connection 808.

In some examples the hand-held mobile telecommunications device 800 and/or the server 806 may also be components of the digital cellular telecommunications network 802.

The hand-held mobile telecommunications device 800 is shown as comprising a transceiver 810. The transceiver 810 is used for establishing the radio connection 804 with the digital cellular telecommunications network 802. The transceiver 810 is connected to a processor 812. The processor 812 is also connected to computer storage 814, computer memory 816, and a touch screen display 820. The touch screen display may be implemented as is element 602 in Fig. 602 in some examples.

The battery 818 is used for powering the components of the hand-held mobile telecommunications device 800. The touch screen display 820 has a first window 604 and a second window 606. The two windows 604, 606 are divided by a menu bar 822. The menu bar 822 contains a number of modifier GUI elements 824. Each of the modifier GUI elements 824 may be dragged into either the first window 604 or the second window 606. When this happens this causes the processor 812 to execute specific pieces of executable code which results in either the display in the first window 604 or in the second window 606 being modified.

In some examples the modifier GUI elements 824 can also be modifier GUI elements. For instance before there is received any data to display in the first window 604 or the second window 606 the menu bar 822 may display selector GUI elements which are then used to drag and drop into the first window 604 or the second window 606. This may for instance cause specific pieces of data stored within the hand-held mobile telecommunications device 800 to be displayed or rendered or it may cause the processor 812 to request data from the mobile telecommunications network 802 via the radio connection 804.

The computer storage 814 is shown as containing a first data object 830 and a second data object 832. The computer storage 814 is further shown as containing a representation of a first data object 834 and a representation 836 of the second data object 832. The representations 834 and 836 are data extracted from the first and second data objects 830, 832 or they are a data which may be rendered on the first window 604 and the second window 606. In some examples the first data object 830 and the second data object 832 may be rendered directly in the first window 604 or the second window 606. In other instances the representations 834, 836 may be plots, images or other graphical representations of data within the data objects 830, 832.

The computer memory 816 is shown as containing a control module 838. The control module 838 contains computer-executable code which enables the processor 816 to control and operate the hand-held mobile telecommunications device 800. This may include such things as an operating system, software code and instructions necessary for establishing the radio connection 804 such as network login protocols and the like. The control module 838 may also contain code which enables the processor 812 to render the representation of the first data object 834 and the second data object 836 in the first window 604 or the second window 606. The control module 838 may also contain executable code which enables the processor 812 to create and receive data from the graphical user interface 820. The computer memory 816 is shown as further containing a data rendering module 840. The data rendering module 840 contains computer-executable code which enables the processor 812 to construct the representation of the first data object 834 from the first data object 830 and the representation of the second data object 836 from the second data object 832.

The computer memory 816 is further shown as containing GUI executable code 842. The GUI executable code contains machine executable instructions that may be executed by the processor 812 when a particular modifier GUI element 824 is dropped into the first window 604 or the second window 606. The execution of this code causes the modification of the first representation or the second representation depending upon whether it was dropped into the first window 604 or the second window 606.

The server 806 is shown as containing a processor 846 connected to a network interface 844. The network interface 844 is used to establish the network connection 808. The processor 846 is also connected to computer storage 848, computer storage 850, and an optional user interface 852. The user interface 852 may in some examples be used to provide one or more of the first data object 830 or the second data object 832. For instance if a video call has been established the user interface 852 may provide streaming video data via the radio connection 804.

In this particular example the computer storage 848 is shown as containing a data source 860. The data source may be a file or database or other data source for providing the first data object 830 and the second data object 832. The computer storage 848 is also shown as containing the first data object 830 and the second data object 832. These may be communicated by the processor 846 to the processor 812 via the radio connection 804.

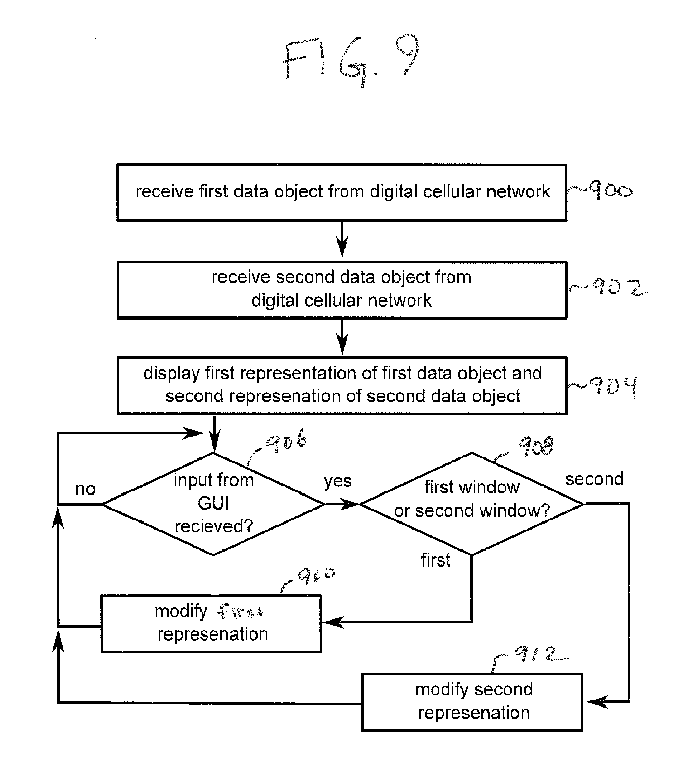

Fig. 9 shows a flowchart which illustrates a method of operating the hand-held mobile telecommunications device 800 and the digital cellular telecommunications network 802. First in step 900 a first data object 830 is received by the processor 812 of a digital cellular telecommunications network 802 via the radio connection 804. Next in step 902 second data object 832 is also received from the digital cellular telecommunications network 802 via the radio connection 804. Next in step 904 a first representation 834 of the first data object 830 is displayed in the first window 604. A second representation 836 of the second data object 832 is displayed in the second window 606. Next the method proceeds to step 906. In step 906 the graphical user interface is queried to see if there has been input received. If there is no input the method returns to step 906 and this query is repeated until one input is received. If there is input received then the method proceeds to step 906 where it is determined if the modifier GUI element 824 was dragged into the first window 604 or the second window 606. If it was dragged into the first window 604 then step 910 is performed. In step 910 the first representation 834 is modified. If the modifier GUI element 824 was moved into the second window 606 then the second representation is modified 912.

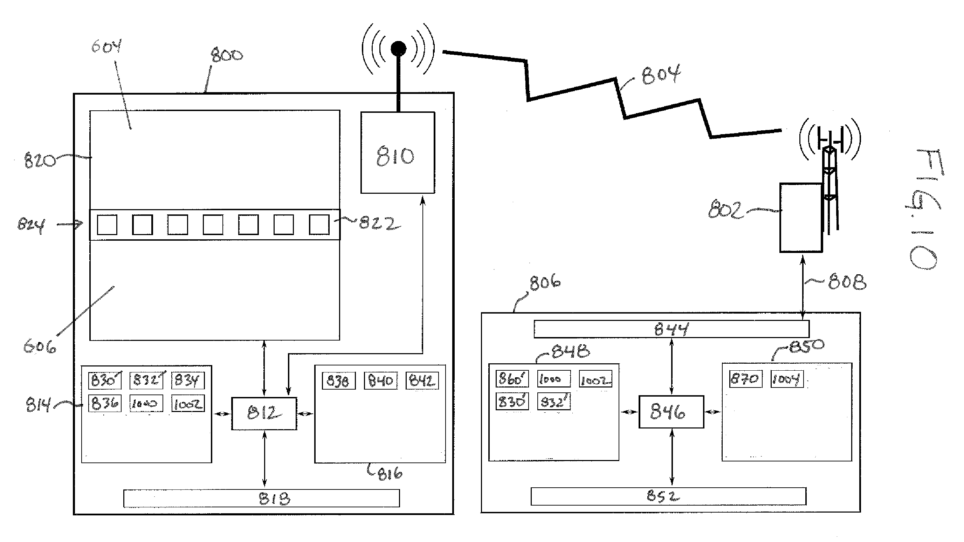

Fig. 10 shows a further example of a hand-held mobile telecommunications device 800 and a digital cellular telecommunications network 802. The example shown in Fig. 10 is very similar to that shown in Fig. 8. However, the first data object 830 has been replaced with a first database response 830' and the second data object 832 has been replaced with a second database response 832'. The two database responses 830', 832' are the data objects. The computer storage 814 is further shown as containing a first database query 1000 and a second database query 1002. These two database queries 1000, 1002 may for instance be generated in response to input to the touch screen 820. The database queries 1000, 1002 are generated and then sent to the server 806 via the radio connection 804 and the network connection 808. The database queries 1000, 1002 are also shown as being stored on the computer storage 848. In this example the data source 860 has been replaced with a relational database 860'. The computer memory 850 is shown as additionally containing an executable query engine 1004 which enables the processor 846 to query the relational database 860'. The processor 846 uses the first database query 1000 and the second database query 1002 as input to the query engine 1004 which then returns the first database response 830' in response to the first database query 1000 and the second database response 832 in response to the second database query 1002. The processor 846 then sends the first database response 830' and the second database response 832' via the network connection 808 and the radio connection 804 to the processor 812.

While the embodiments are described with reference to various implementations and exploitations, it will be understood that these embodiments are illustrative and that the scope of claims provided below is not limited to the embodiments described herein. In general, the techniques described herein may be implemented with facilities consistent with any hardware system or hardware systems defined herein. Many variations, modifications, additions, and improvements are possible.

Plural instances may be provided for components, operations, or structures described herein as a single instance. Finally, boundaries between various components, operations, and data stores are somewhat arbitrary, and particular operations are illustrated in the context of specific illustrative configurations. Other allocations of functionality are envisioned and may fall within the scope of the claims. In general, structures and functionality presented as separate components in the exemplary configurations may be implemented as a combined structure or component. Similarly, structures and functionality presented as a single component may be implemented as separate components. These and other variations, modifications, additions, and improvements fall within the scope of the claims and their equivalents.

### List of reference numerals

- 100: system
- 102: client system
- 104: computing platform
- 106: communication module
- 108: data set manager
- 110: menu activation module
- 112: graphical object manager
- 114: menu activity monitor
- 116: display generator
- 118: user interface module
- 402: user interface
- 404: data set
- 406: data set
- 408: copy action
- 410: move action
- 412: delete action
- 414: highlight action
- 416: cursor
- 418: graphical object
- 420: graphical object
- 502: user interface
- 504: data set
- 506: data set
- 508: send action
- 510: highlight action
- 512: copy action
- 514: move action
- 516: delete action
- 518: graphical object
- 520: graphical object
- 602: user interface
- 604: display area or first window
- 606: display area or second window
- 608: data item
- 610: data item
- 612: data item
- 614: data item
- 616: cursor
- 618: graphical object
- 620: graphical object
- 700: processing system
- 702: processor
- 704: main memory
- 706: static memory
- 708: bus
- 710: video display
- 712: alphanumeric input device
- 714: user interface navigation device
- 716: drive unit
- 718: signal generation device
- 720: network interface device
- 722: machine readable medium
- 724: instructions
- 726: computer network
- 800: hand-held mobile telecommunications device
- 802: digital cellular telecommunications network
- 804: radio connection
- 806: server
- 808: network connection
- 810: transceiver
- 812: processor
- 814: computer storage
- 816: computer memory
- 818: battery
- 820: touch screen display
- 822: menu bar
- 824: modifier GUI elements
- 830: first data object
- 830': first database response
- 832: second data object
- 832': second database response
- 834: representation of first data object
- 836: representation of second data object
- 838: control module
- 840: data rendering module
- 842: GUI executable code
- 844: network interface
- 846: processor
- 848: computer storage
- 850: computer memory
- 852: user interface
- 860: data source
- 860': relational database
- 870: control module
- 1000: first database query
- 1002: second database query
- 1004: query engine

## Claims

1. A hand-held mobile telecommunications device (800) for telecommunications via a digital cellular telecommunications network comprising:
- a battery (818) for powering the mobile telecommunications device;
- a touch screen display (820) operable for displaying a graphical user interface and for receiving user input;
- a transceiver (810) for exchanging data with the digital cellular telecommunications network (802);
- at least one processor (812); and
- a memory (816) for storing machine executable instructions (838, 840, 842) for execution by the processor, wherein execution of the instructions cause the at least one processor to:
• receive (900) a first data object (830, 830') via the digital cellular telecommunications network;
• receive (902) a second data object (832, 832') via the digital cellular telecommunications network;
• display (904) a first representation (834) of the first data object and a second representation (836) of the second data object in the graphical user interface, wherein the graphical user interface comprises a first window (604) for displaying the first representation and a second window (606) for displaying the second representation, wherein the graphical user interface further comprises a menu bar (822) separating the first window and the second window, wherein the menu bar further comprises multiple modifier GUI elements (824), wherein each of the multiple modifier GUI elements are operable to be dragged into one of the first window and the second window;
• modify (910) the first representation in response to dragging a first modifier GUI element into the first window, wherein the first modifier GUI element is one of the multiple modifier GUI elements; and
• modify (912) the second representation in response to dragging the second modifier GUI element into the second window, wherein the second modifier GUI element is one of the multiple modifier GUI elements.

2. The hand-held mobile telecommunications device of claim 1, wherein the first data object is a first database response (830'), wherein the second data object is a second database response (832').

3. The hand-held mobile telecommunications device of claim 2, wherein modifying the first representation in response to dragging the first modifier GUI element into the first window comprises:
- querying a database (860') with a first database query (1000) using the digital cellular telecommunications network,
- receiving a first database query response (830) from the database; and
- modifying the first representation using the first database query response.

4. The hand-held mobile telecommunications device of claim 3, wherein modifying the second representation in response to dragging the second modifier GUI element into the second window comprises:
- querying the database with a second database query (1002) using the digital cellular telecommunications network,
- receiving a second database query response (832') from the database; and
- modifying the second representation using the second database query response.

5. The hand-held mobile telecommunications device of claim 2, 3, or 4, wherein modifying the first representation in response to dragging the first modifier GUI element into the first window comprises executing a first algorithm to process the first database response.

6. The hand-held mobile telecommunications device of any one of claims 2 through 5, wherein modifying the second representation in response to dragging the second modifier GUI element into the second window comprises executing a second algorithm to process the first database response.

7. The hand-held mobile telecommunications device of any one of the previous claims, wherein the first representation comprises a first plot of a portion of the first data object, wherein second representation comprises a second plot of a portion of the second data object, wherein the first representation is modified in response to dragging the first modifier GUI element into the first window by modifying the first plot, and wherein the second representation is modified in response to dragging the second modifier GUI element into the first window by modifying the second plot.

8. The hand-held mobile telecommunications device of claim 7, wherein modifying the first plot and/or modifying the second plot comprises any one of the following: modifying the portion of the first data object, modifying the portion of the second data object, rescaling the first plot, rescaling the second plot, and combinations thereof.

9. The hand-held mobile telecommunications device of any one of the preceding claims, wherein execution of the instructions further causes the at least one processor to:
- send a first data object request (1000) via the digital cellular telecommunications network, wherein the first data object is received via the digital cellular telecommunications network in response to the first data object request; and
- send a second data object request (1002) via the digital cellular telecommunications network, wherein the second data object is received via the digital cellular telecommunications network in response to the first data object request.

10. The hand-held mobile telecommunications device of claim 9, wherein the first data object request and/or the second data object request are any one of the following: a SQL query for a relational database, a web page request, and a data record request, a video conference connection request.

11. The hand-held mobile telecommunications device of claim 9 or 10, wherein the menu bar is operable for displaying multiple selector GUI elements before displaying the first representation and the second representation, wherein each of the multiple selector GUI elements are operable to be dragged into the first window and/or the second window, wherein the first data object request is sent in response to a first selector GUI element being dragged into the first window, wherein the second data object is sent in response to a second selector GUI element being dragged into the second window, wherein the first selector GUI element is selected from the multiple selector GUI elements, wherein the second selector GUI element is selected from the multiple selector GUI elements.

12. The hand-held mobile telecommunications device of any one of the preceding claims, wherein the first data object and the second data object are any one of the following: a plot, a video feed, a video, a database record, a sales report, a product comparison, a graphic, and a video call connection.

13. A digital cellular telecommunications network comprising the hand-held mobile telecommunications device of any one of the preceding claims.

14. The digital cellular telecommunications network of claim 13, wherein the digital cellular telecommunications network further comprises a server (806) operable for sending the first data object and the second data object via the digital cellular telecommunications network to the hand-held mobile telecommunications device.

15. The digital cellular telecommunications network of claim 13 or 14, wherein the digital cellular telecommunications network further comprises a radio transceiver means operable for forming a radio connection (804) with the hand-held mobile telephone device.
